# FASCICULE DE BREVET EUROPEEN

(11) **EP 3 652 421 B1**
(45) Date de publication et mention de la délivrance du brevet: **04.08.2021**
(21) Numéro de dépôt: 18735684.5
(22) Date de dépôt: 18.06.2018
(51) Int. Cl.: F01N 9/00

(54) **PROCÉDÉ D'ESTIMATION D'UNE CHARGE D'UN FILTRE À PARTICULES POUR MOTEUR THERMIQUE À ALLUMAGE COMMANDÉ**
VERFAHREN ZUR SCHÄTZUNG EINER LADUNG DES PARTIKELFILTERS EINES VERBRENNUNGSMOTORS MIT KONTROLLIERTER ZÜNDUNG
METHOD FOR ESTIMATING A CHARGE OF THE CONTROLLED IGNITION COMBUSTION ENGINE PARTICULATE FILTER

(30) Priorité: 12.07.2017 FR 1756606
(43) Date de publication de la demande: 20.05.2020
(73) Titulaire: PSA Automobiles SA, 78300 Poissy (FR)
(72) Inventeur: FURIO VIZCAINO, Javier, 94300 Vincennes (FR); KARAGEORGIOU, Dimitrios, 92500 Rueil Malmaison (FR)
(86) Numéro de dépôt international: PCT/FR2018/051437
(87) Numéro de publication internationale: WO 2019/012196

(56) Documents cités:
- EP-A1- 1 209 333
- EP-A1- 2 700 793
- FR-A1- 2 963 641
- US-A1- 2003 230 078

## Description

La présente invention concerne un procédé d'estimation d'une charge en suies d'un filtre à particules pour moteur thermique à allumage commandé, fonctionnant par exemple à l'essence, le filtre se trouvant dans une ligne d'échappement en sortie du moteur thermique.

Les normes anti-pollution à venir, notamment en Europe avec la prochaine application de la réglementation émissions Euro 6 2^{ème} étape, durcissent fortement le seuil à respecter pour les particules émises par les motorisations à Injection Directe d'Essence ou moteurs à allumage commandé puis plus tard à injection indirecte.

Le respect d'une telle réglementation pourrait imposer d'utiliser un filtre à particules dans la ligne d'échappement de tels moteurs. Un tel filtre à particules pour des motorisations à allumage commandé fonctionnant à l'essence, aussi communément appelé GPF pour la dénomination anglaise de « Gasoline Particle Filter », c'est-à-dire de filtre à particules pour carburant essence, ci-après dénommé filtre à particules essence, est relativement similaire à ceux utilisés pour les motorisations Diesel à allumage par compression mais ses caractéristiques sont adaptées afin de ne pas pénaliser les performances ou la consommation.

Une ligne d'échappement comprend un conduit de circulation des gaz d'échappement équipé d'organes de traitement chimique et/ou physique des gaz d'échappement, par exemple à la sortie d'un moteur thermique à allumage commandé à carburant à essence, un catalyseur avantageusement trois voies, un filtre à particules logé à l'intérieur d'une enveloppe métallique, aussi appelée sous la dénomination anglaise de « canning », cette enveloppe métallique pouvant être commune au catalyseur et au filtre à particules.

Le filtre à particules d'une ligne d'échappement sert à la rétention de suies en son intérieur. Le principe de filtration est identique à celui d'un filtre à particules pour motorisation Diesel c'est-à-dire que la filtration est basée sur le passage des suies dans des canaux poreux.

Au bout d'une durée écoulée ou d'une certaine distance parcourue, un filtre à particules se retrouve chargé en particules, notamment en suies. Il faut alors le nettoyer ou le régénérer. Cette régénération passe par la combustion de ces suies. Pour brûler ces suies, le moteur peut passer dans un mode de combustion spécifique pour augmenter la température des gaz d'échappement environ jusqu'à 650°C pour brûler les suies, sans additif d'aide à la combustion des suies, dans le filtre à particules. Une régénération se passe donc sous température élevée en présence d'un apport d'oxygène.

Pour les moteurs thermiques à allumage commandé à carburant essence, ces conditions sont naturellement présentes pour une régénération passive qui est en fait quasi continue. Donc il n'y a en général pas de déclenchement de régénération en mode nominal dite régénération fonctionnelle. Il s'ensuit que pour un moteur thermique à carburant essence, une zone importante de fonctionnement du moteur permet d'apporter la thermique nécessaire et l'oxygène peut être apporté par des coupures d'injection lors de levers de pied ou lors des passages de rapport de vitesse. Tout cela apporte les conditions des régénérations passives.

Des stratégies ont toutefois été implémentées pour des conducteurs atypiques et une régénération dysfonctionnelle active serait déclenchée à partir d'environ 5 grammes de suies contenus dans le filtre à particules. Les conducteurs atypiques sont ceux qui font des parcours courts, par exemple de moins de 15 km, à vitesse peu élevée. Le mode de passage de vitesses et une conduite sportive ou non influent aussi sur la tenue des régénérations.

La masse de suies contenue dans le filtre à particules est à surveiller. Ceci peut être fait en contrôlant la contre-pression aux bornes du filtre à particules, de préférence avec une estimation du débit des gaz d'échappement dans le filtre à particules. Il est important que cette mesure se fasse aux bornes du filtre à particules et non pas entre quelque part en amont du filtre à particules et quelque part en aval du filtre à particules. Par contre, il se peut que cette mesure soit manquante pendant des instants du roulage ou connaisse des dispersions.

En effet, les éléments de dépollution dans le voisinage du filtre à particules essence, notamment le catalyseur trois voies, de même que des conditions de roulage instables, comme des conditions de roulage à forte dynamique, peuvent créer des dispersions et fausser les mesures de différence de pression et l'estimation de la masse de suies stockée dans le filtre à particules essence.

C'est pour cela qu'il est estimé plusieurs valeurs de charge en suies. L'estimation de chaque valeur de charge se fait par régression linéaire sur un premier nombre de couples d'une mesure d'une contre-pression aux bornes du filtre avec une estimation d'un débit volumique en amont du filtre dans la ligne. Les couples sont sélectionnés au moins comme présentant une relation linéaire entre la mesure d'une contre-pression et l'estimation du débit volumique associés. Une moyenne sur un deuxième nombre de valeurs de charge consécutives donne une estimation sur la charge en suies qui doit être fiable.

D'autres estimations peuvent se faire à partir des émissions de gaz en provenance du moteur dans sa ligne d'échappement. Ces estimations sont moins précises que celle basée sur un différentiel de pression mais peuvent compenser une estimation basée sur le différentiel de pression manquante. L'élaboration de modèles de combustion est possible pour ces estimations.

Comme l'utilisation du filtre à particules dans une motorisation essence est récente, il existe peu d'état de la technique relatif à l'amélioration de l'estimation des charges courantes de suies dans un filtre à particules essence.

Par exemple, le document FR-A-2 963 641 décrit un procédé pour lancer de manière ciblée la régénération d'un filtre à particules dans la ligne de gaz d'échappement d'un moteur thermique ayant un catalyseur en aval du filtre à particules. La régénération du filtre à particules se fait par combustion des particules au cours de la phase de régénération.

Pour un moteur chaud, mais qui n'est pas encore à une température suffisante pour la régénération du filtre à particules, on intervient périodiquement pour augmenter la température des gaz d'échappement en amont du filtre à particules ou dans celui-ci. Ce procédé s'applique aux moteurs à essence. Par contre ce document ne donne aucune information quant à une manière d'évaluation précise de la masse de suies par prises de mesures de contre-pression aux bornes d'un filtre à particules.

On connait encore le document EP2700793A1 correspondant au préambule de la revendication 1.

Par conséquent, le problème à la base de l'invention est, pour un groupe motopropulseur comportant un moteur thermique à carburant essence et une ligne d'échappement logeant un filtre à particules essence, d'estimer avec précision la charge en suies contenue dans le filtre par des mesures de contre-pression en sélectionnant les mesures de contre-pression prises afin que celles-ci puissent donner une estimation de la charge finale courante en suies du filtre à particules la plus précise possible.

Pour atteindre cet objectif, il est prévu selon l'invention un procédé d'estimation d'une charge en suies d'un filtre à particules pour moteur thermique à allumage commandé, le filtre se trouvant dans une ligne d'échappement en sortie du moteur, dans lequel :
- on estime un gradient de pression, l'estimation de ce gradient de pression se faisant par régression linéaire sur un nombre de couples d'une mesure d'une contre-pression aux bornes du filtre avec une estimation d'un débit volumique en amont du filtre dans la ligne,
- on estime une charge en suies à partir de ce gradient de pression,
- on effectue une moyenne sur un nombre de valeurs de charge consécutives donnant une estimation finale d'une charge courante en suies,
caractérisé en ce qu'il est considéré un premier critère de stabilité basé sur une durée de calcul du gradient de pression avec, quand la durée de calcul de la valeur du gradient de pression est inférieure à un seuil de durée calibrable, la valeur de charge estimée à partir de ce gradient de pression est comptée dans le nombre de valeurs de charge.

L'effet technique est d'obtenir une robustesse des estimations de la charge courante en suies du filtre à particules émise vers l'unité de contrôle commande du moteur. L'estimation de la charge courante est faite à partir de mesures de contre-pression aux bornes du filtre ainsi que de l'estimation du débit volumique en amont de celui-ci.

En effet, une estimation précise et juste de la charge en suies du filtre à particules est de vitale importance pour garantir le bon fonctionnement de celui-ci ainsi que pour éviter des risques de colmatage, voire même d'incendie, lorsque le niveau de la charge en suies devient trop important dans le filtre. Conformément au procédé selon l'invention, il est identifié les conditions dans lesquelles la mesure de la contre-pression aux bornes du filtre est la plus fiable, en prenant un temps moindre de calcul que les estimations non fiables.

De cette façon, il est obtenu une estimation précise et fiable de la charge courante du filtre par mesures de contre-pression pour ensuite l'utiliser pour corriger ou recaler d'autres modèles ou diagnostics de la charge en suies, par exemple des estimations basées sur des modèles physiques ou modèles fonctionnant en boucle ouverte, comme notamment un modèle d'estimation de charge courante selon les émissions de gaz d'échappement.

Un des principaux objectifs du procédé selon l'invention est de mettre à jour les autres estimations de la charge en suies ou diagnostics du filtre qui sont liés à cette information. Cela permet vérifier la cohérence des autres modèles de charge en suies ainsi que des diagnostics associés dans le contrôle et de mettre au même niveau toutes les estimations. Cela requiert que l'estimation de la charge courante en suies en fonction de mesures de contre-pression soit très fiable et très précise.

La solution proposée se base sur un calcul qui utilise comme information d'entrée l'estimation de la charge en suies du filtre à particules à partir de la contre-pression mesurée aux bornes du filtre et l'estimation du débit volumique en amont du filtre. En sortie, le calcul fournit une moyenne d'estimations consécutives de la variable d'entrée. Cette moyenne a comme propriété d'être plus précise que l'estimation d'entrée, du fait que le procédé selon la présente invention impose un critère de robustesse à chaque valeur de la variable d'entrée avant de calculer la moyenne.

Cette moyenne ne sera faite que s'il est identifié N valeurs consécutives de la variable d'entrée qui respectent le critère imposé. En cas contraire, le calcul est avorté et aucune valeur de la moyenne représentant la charge courante de suies n'est envoyée aux autres fonctions, par exemple d'autres estimations de charge en suies, pour les mettre à jour, car les conditions pour garantir la fiabilité du calcul ne sont pas respectés.

Il existe donc une relation directe entre le temps de calcul d'une valeur de charge et la fiabilité de cette valeur de charge. Un profil de roulage qui est dans les bonnes conditions, c'est-à-dire un profil stabilisé avec une plage de débit stable aura une estimation de charge courante plus rapide et plus fiable qu'un profil qui n'a pas ces conditions ou qui a du mal à les avoir, par exemple un profil transitoire avec des accélérations et décélérations.

Sans cette invention, la mise à jour des fonctions ou diagnostics liées à l'estimation de la charge en suies ne serait pas possible ou serait trop aléatoire, du fait que si la charge courante est fausse, cela impactera toutes les autres fonctions.

Avantageusement, la moyenne est effectuée sur le nombre de valeurs de charge consécutives quand toutes les valeurs de charge consécutives retenues pour la moyenne présentent des durées de calcul respectives inférieures au seuil de durée calibrable.

Avantageusement, le seuil de durée calibrable est de 100 secondes.

Avantageusement, le nombre de couples est entre 800 et 1.000 mesures.

Avantageusement, le nombre de valeurs de charge consécutives servant à la moyenne de la charge finale courante en suies est compris entre 1 et 5.

Avantageusement, la régression linéaire est faite selon la méthode des moindres carrés sur les couples sélectionnés.

Avantageusement, lors de la sélection des couples pour l'estimation d'une valeur de charge en cours, il est ajouté un critère de stabilité de point de fonctionnement. Ce critère de stabilité est basé sur l'observation du gradient du débit volumique des gaz à l'échappement en amont du filtre à particules ainsi que du gradient de la mesure de la contre-pression du filtre à particules. Par exemple, lorsque le gradient du débit volumique dépasse un seuil de 0.05 m3/s2 et le gradient de contre-pression dépasse un seuil de 120 mbar/s (valeurs calibrables), le point de fonctionnement est considéré comme non stable. Ce critère de stabilité permet d'éliminer les couples obtenus lors de phases transitoires ou dynamiques comprenant des accélérations et décélérations successives supérieures à un seuil prédéterminé.

Avantageusement, l'estimation finale de la charge courante en suies sert à l'établissement ou la réactualisation d'un modèle et/ou d'un diagnostic. Ceci permet une interconnexion entre tous les modes d'estimation d'une charge courante en suie d'un filtre à particules et permet de vérifier les diversions entre les modes d'estimation.

Avantageusement, quand la durée de calcul d'une valeur du gradient de pression en cours dépasse le seuil de durée, toutes les valeurs de gradient de pression estimées et incorporées dans le nombre de valeurs de charge sont effacées et un comptage des valeurs de charge est remis à zéro.

L'invention concerne un groupe motopropulseur présentant un moteur thermique à allumage commandé relié à sa sortie à une ligne d'échappement des gaz issus d'une combustion dans le moteur, la ligne d'échappement comprenant un filtre à particules et le groupe motopropulseur une unité de supervision du filtre à particules, la ligne d'échappement comprenant un capteur de contre-pression aux bornes du filtre et des moyens d'estimation du débit de gaz dans la ligne d'échappement, caractérisé en ce que l'unité de supervision comprend des moyens de mise en œuvre d'un tel procédé.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'un ensemble d'un moteur thermique atmosphérique à carburant essence et d'une ligne d'échappement comportant un catalyseur trois voies et un filtre à particules, le procédé de confirmation d'un diagnostic de colmatage d'un filtre pouvant être mis en oeuvre dans un tel ensemble,
- la figure 2 montre des points de contre-pression aux bornes d'un filtre à particules en fonction d'un débit volumique de gaz d'échappement dans une ligne d'échappement de moteur thermique à carburant, une relation linéaire apparaissant pour des points stabilisés dans une zone linéaire,
- la figure 3 montre à une première courbe montrant l'évolution d'un premier nombre de points de valeurs de charge dPdV pris dans un intervalle de temps t, et, à une deuxième courbe, une valeur moyenne de charge BF remise à jour après moyenne d'un deuxième nombre de valeurs de charge,
- la figure 4 montre un logigramme d'un mode d'application du procédé d'estimation d'une charge en suies d'un filtre à particules pour moteur thermique à essence selon la présente invention pour la réactualisation de modèles d'estimation de charges courantes et d'unités de diagnostic.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

On entend par groupe motopropulseur le moteur thermique et tous ses éléments auxiliaires comme une ligne d'échappement, une unité de contrôle commande en charge du fonctionnement du moteur et du contrôle de la dépollution dans la ligne d'échappement, le groupe motopropulseur pouvant comporter ou non un turbocompresseur.

Une régénération préventive est aussi appelée régénération dysfonctionnelle car n'entrant pas dans le cadre des régénérations typiques, du type régénérations spontanées ou régénérations se faisant après l'obtention d'une masse de suies dans le filtre à particules supérieur à un seul maximal de masse de suie qui peut par exemple être supérieur à 10 grammes et atteindre même 20 grammes alors qu'une régénération dysfonctionnelle se fait à un seuil intermédiaire inférieur, par exemple d'au moins 5 grammes, une régénération spontanée se faisant à n'importe quelle charge.

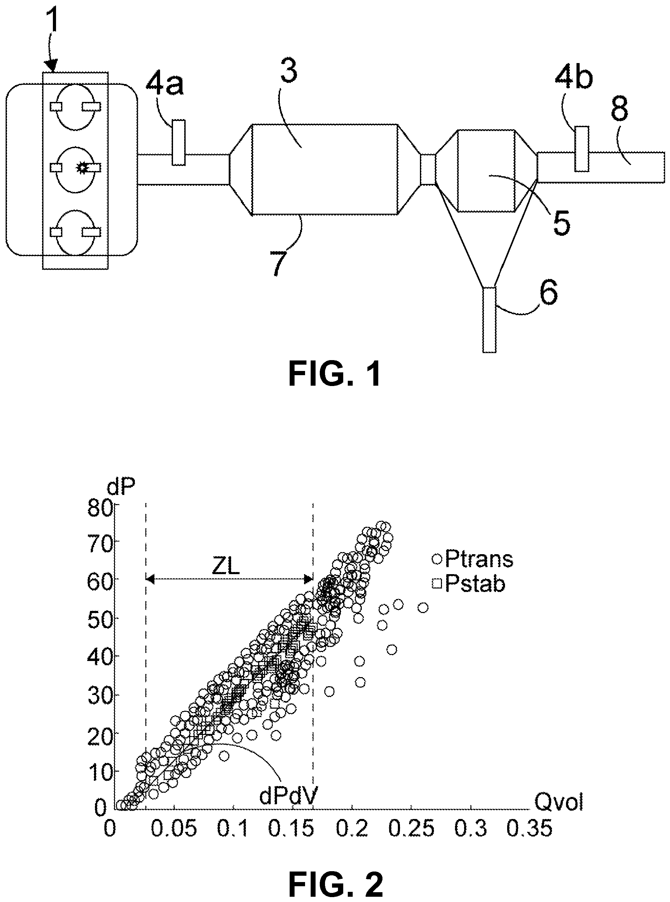

En se référant notamment à la figure 1, qui montre un moteur et une ligne d'échappement pouvant mettre en oeuvre le procédé selon la présente invention bien que le moteur et la ligne ne soient pas montrés avec des caractéristiques spécifiques de mise en oeuvre de la présente invention, l'invention concerne un procédé de lancement de régénération préventive d'un filtre 5 à particules dans un groupe motopropulseur comprenant un moteur 1 thermique à allumage commandé et une ligne 8 d'échappement intégrant le filtre 5. Un tel moteur 1 thermique à allumage commandé fonctionne avec un carburant adapté, par exemple de l'essence ou un mélange essence-alcool.

Une charge en suies du filtre 5 est mesurée ou estimée, au moins par mesure d'un différentiel de pression aux bornes du filtre 5 ou en estimant les émissions dans la ligne 8 d'échappement depuis une dernière régénération et en tenant compte, le cas échéant, de régénérations spontanées ayant entraîné une combustion de suies dans le filtre 5. La charge en vigueur dans le filtre 5 ne doit pas dépasser un seuil maximal de charge prédéterminé.

La figure 1 montre aussi une enveloppe 7 métallique respective pour le catalyseur trois voies 3 et le filtre 5 à particules donc seule est référencée 7 l'enveloppe pour le catalyseur trois voies 3. Il est montré un capteur 6 de différentiel de pression ou contre-pression aux bornes du filtre 5 à particules et une sonde à oxygène en amont 4a du catalyseur trois voies 3 et une sonde à oxygène en aval 4b du filtre 5 à particules. Tous les éléments nouvellement mentionnés ne sont pas essentiels pour la mise en œuvre de la présente invention à part le capteur 6 de contre-pression.

En se référant à toutes les figures, la présente invention concerne un procédé d'estimation d'une charge en suies d'un filtre 5 à particules pour moteur 1 thermique à allumage commandé, le filtre 5 se trouvant dans une ligne 8 d'échappement en sortie du moteur 1. Dans ce procédé, il est estimé des valeurs de charge dPdV en suies, l'estimation de chaque valeur de charge dPdV se faisant par régression linéaire sur un premier nombre N de couples d'une mesure d'une contre-pression aux bornes du filtre 5 avec une estimation d'un débit volumique en amont du filtre 5 dans la ligne 8. Le résultat de la régression est un gradient de pression dPdV.

Les couples sont sélectionnés s'ils appartiennent à la plage ZL de débit volumique où la relation entre contre-pression du filtre 5 et débit volumique est linéaire. Cette plage ZL est prédéterminée par caractérisation préalable du filtre à particules. La figure 2 montre des points stabilisés Pstab et des points transitoires Ptrans de couples d'une mesure d'une contre-pression dP aux bornes du filtre 5 avec une estimation d'un débit volumique en amont du filtre Qvol, ce qui donne des points dPdV de valeurs de charge une fois la régression linéaire effectuée. Il peut être vu que les points stabilisés Pstab se prêtent mieux à une régression linéaire que les points transitoires Ptrans. La référence ZL définit la zone linéaire. La différence de pression dP est exprimée en millibars, 1 millibars étant équivalent à 100Pascals et le débit volumique en mètres cube par seconde.

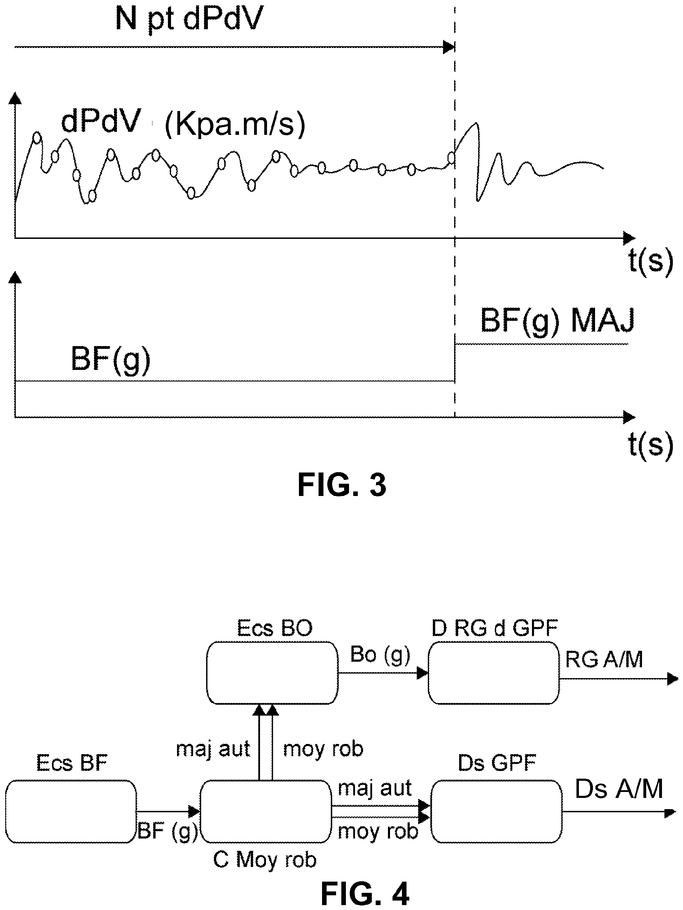

Il est ensuite effectué une moyenne sur un deuxième nombre X de valeurs de charge en suies BF consécutives donnant une estimation finale d'une charge courante BF en suies, X n'étant pas référencé aux figures. Ceci est montré à la figure 3. Pour la première courbe du haut, Npt dPdV est le nombre de points consécutifs permettant de déterminer le gradient de pression dPdV qui s'exprime en kiloPascals.mètre par seconde, le temps t étant exprimé en secondes. Pour la deuxième courbe du bas, une moyenne de valeurs de charge BF en grammes est réactualisée en une moyenne de valeurs de charge BF MAJ en grammes en prenant en compte les N points de valeurs de couples permettant de déterminer le gradient de pression Npt dPdV.

Selon l'invention, il est considéré un premier critère de stabilité basé sur une durée de calcul du gradient de pression dPdV. Quand la durée de calcul de la valeur de ce gradient de pression dPdV est inférieure à un seuil de durée calibrable, la valeur de charge BF obtenue à partir de ce gradient de pression dPdV est comptée dans le nombre X de valeurs de charge BF et pourra servir au calcul d'une moyenne de valeurs de charge BF si cette valeur de charge BF est suivie de X-1 valeurs de charge BF consécutives acceptables en répondant à ce premier critère de stabilité.

Comme montré à la figure, l'estimation de la charge en suies via la contre-pression mesurée aux bornes du filtre 5 se base sur la propre mesure de contre-pression, ainsi que sur l'estimation du débit volumique en amont du filtre 5. En effet, la relation entre ces deux grandeurs physiques peut s'approximer par un polynôme d'ordre 2 ou quadratique. De plus, il existe une plage de débit volumique dans laquelle la relation peut être considérée comme linéaire, avec des erreurs acceptables, plage qui est référencée ZL à la figure 2.

La méthode de calcul d'une masse courante de suies consiste donc à prendre un échantillon d'un premier nombre N de couples de mesures de contre-pression du filtre 5 en millibars, 1 millibar étant équivalent à 100 Pascals, et de débit volumique en amont du filtre 5 en mètre cube par seconde. Le premier nombre N est avantageusement calibrable et il est calculé ensuite une régression linéaire, avantageusement par la méthode des moindres carrés, sur ces couples.

La valeur obtenue de régression, dite gradient de pression dPdV peut s'associer directement à une charge de suies dans le filtre 5 à particules. La valeur de charge BF est obtenue à partir du gradient de pression dPdV par exemple à l'aide d'une cartographie qui établit la valeur de charge BF en fonction du gradient de pression dPdV. Plusieurs valeurs de charge BF sont avantageusement moyennées pour donner une charge courante BF de suies dans le filtre 5 à particules.

La condition indispensable pour appliquer cette régression est de fonctionner dans la plage ZL de débit volumique où la relation entre contre-pression du filtre 5 et débit volumique est linéaire. En plus de cette condition principale, d'autres critères s'ajoutent afin d'améliorer la précision du calcul du gradient de pression dPdV. Par exemple, un critère de stabilité du point de fonctionnement est également à respecter, car l'on observe que lors des phases transitoires ou dynamiques, les points dP=fQvol sont plus dispersés en s'éloignant de la régression, ce qui peut ajouter des erreurs dans le calcul du gradient de pression dPdV et donc de la valeur de charge BF obtenue.

Finalement, ces critères se traduisent en une sélection de points robustes pour faire l'estimation de la charge courante BF en suies du filtre 5 à particules. On en déduit donc que, lorsque le profil de roulage n'est pas favorable pour l'estimation de la charge courante BF, par exemple un débit volumique hors la plage de linéarité et/ou des points de fonctionnement très dynamiques, le calcul du gradient de pression dPdV et donc de la valeur de charge BF associée devient long car la plupart des couples ne sont pas retenus pour le calcul et que cela induit un temps plus long à réunir le premier nombre N de points nécessaires pour estimer le gradient de pression dPdV et donc la valeur de charge BF courante.

Ainsi, pour une estimation de la charge en suies, la moyenne de valeurs de charge BF consécutives peut être effectuée sur le nombre X de valeurs de charge BF consécutives quand toutes les valeurs de gradient de pression dPdV consécutives retenues pour la moyenne présentent des durées de calcul respectives inférieures au seuil de durée calibrable.

Quand la durée de calcul d'une valeur de gradient de pression dPdV en cours dépasse le seuil de durée, toutes les valeurs de charge BF estimées et incorporées dans le nombre X de valeurs de charge BF peuvent être effacées et un comptage des valeurs de charge BF peut être remis à zéro.

Le seuil de durée calibrable peut être de 100 secondes. Le nombre N de couples peut être entre 800 et 1000 mesures. Le nombre X de valeurs de charge BF consécutives servant à la moyenne de la charge finale courante BF en suies peut être compris entre 1 et 5.

Il existe plusieurs méthodes de régression mais la régression linéaire préférée peut être faite selon la méthode des moindres carrés sur les couples sélectionnés.

Lors de la sélection des couples pour l'estimation d'une valeur de gradient de pression dPdV en cours, en plus de la relation linéaire entre la mesure d'une contre-pression et le débit volumique d'un couple, il peut être ajouté un second critère de stabilité de point de fonctionnement permettant d'éliminer les couples obtenus lors de phases transitoires ou dynamiques comprenant des accélérations et décélérations successives supérieures à un seuil prédéterminé

Pour le nombre X de valeurs de charge BF consécutives répondant au premier critère de stabilité basé sur la durée de calcul de chaque valeur de gradient de pression dPdV, la moyenne peut être effectuée et l'estimation finale d'une charge courante (BF) en suies servir à l'établissement ou la réactualisation d'un modèle Ecs BO et/ou d'un diagnostic Ds GPF.

Ainsi, une estimation finale d'une charge courante BF en suies peut être utilisée pour recaler un modèle d'estimation d'une charge courante BO en suies d'un filtre 5 à particules selon les émissions des gaz d'échappement, ce modèle EcsBO fonctionnant en boucle ouverte et donc devant être périodiquement remis à jour. Le modèle par émission tient compte de possibles régénérations ayant eu lieu pendant l'estimation et ayant diminué la charge courante en suie. D'autres modèles d'estimation d'une charge courante peuvent aussi être recalés par l'estimation finale d'une charge courante BF en suies, comme un modèle en conditions critiques surévaluant la charge courante en suies dans le but de protéger le filtre 5 à particules et d'anticiper un colmatage du filtre 5. Ceci vaut notamment pour des profils de roulage défavorables à la tenue d'une régénération spontanée ou fonctionnelle.

La figure 4, tout en se référant à la figure 1 pour les références manquantes à la figure 4 montre un logigramme d'une application d'un mode de réalisation du procédé selon la présente invention.

Une estimation de chargement en suies Ecs BF selon des mesures de contre-pression aux bornes d'un filtre 5 à particules donne des valeurs de gradient de pression dPdV et permettent d'obtenir une valeur de charge BF. Ces valeurs de charges BF sont moyennées pour donner une charge finale courante BF du filtre 5 à particules. Ceci se passe si le calcul de la moyenne est robuste C Moy rob c'est-à-dire s'il existe un nombre X de valeurs de charge BF consécutives respectant le critère de stabilité basé sur une durée de calcul de chaque valeur de gradient de pression dPdV.

Si c'est le cas une mise à jour est autorisée maj aut pour une estimation du chargement en suies pour la réactualisation d'un modèle fonctionnant à partir des estimations d'émissions de gaz d'échappement Ecs BO, la charge finale courante moy rob obtenue par mesures de contre-pression étant transmise pour cette estimation.

Après réactualisation de la charge finale selon le modèle BO en grammes, il peut être pris une décision de lancement d'une régénération dysfonctionnelle du filtre 5 à particules D RG d GPF avec le pilotage du démarrage et de l'arrêt de la régénération RG A/M.

Parallèlement, il est transmis à une unité de diagnostic de surcharge Ds GPF, les mêmes données que celles transmises pour l'estimation du chargement par un modèle d'émission Ecs BO, c'est-à-dire une mise à jour autorisée maj aut et une moyenne robuste moy rob de la charge finale courante obtenu par la moyenne du nombre X de valeurs de charge BF. Par cette unité de diagnostic de surcharge Ds GPF et en considérant cette nouvelle donnée moy rob, il est lancé ou non un ou des diagnostics Ds GPF, notamment un diagnostic de surcharge ou de colmatage du filtre 5 à particules Ds A/M.

Il faut donc trouver un premier nombre N de valeurs de gradient de presion dPdV respectant le premier critère de stabilité basé sur une durée de calcul de la valeur de gradient de pression dPdV pour déterminer une valeur de charge BF et effectuer ensuite une moyenne de ces valeurs de charge BF et envoyer vers les autres fonctions, modèles ou diagnostics, pour les mettre à jour par rapport à la nouvelle masse finale courante, cette nouvelle masse finale courante étant considérée comme la plus juste.

Un critère supplémentaire peut être inclus dans le premier bloc d'estimation de chargement en suies Ecs BF selon des mesures de contre-pression aux bornes d'un filtre 5 à particules. Si le temps depuis le calcul de la charge courante BF finale moyennée dépasse un certain temps, cette charge courante BF finale moyennée ne se mettra pas à jour et les valeurs de charge BF apprises jusqu'à cet instant seront effacées.

L'invention concerne un groupe motopropulseur présente un moteur 1 thermique à allumage commandé relié à sa sortie à une ligne 8 d'échappement des gaz issus d'une combustion dans le moteur 1, la ligne 8 d'échappement comprenant un filtre 5 à particules et le groupe motopropulseur une unité de supervision du filtre 5 à particules essence, la ligne 8 d'échappement comprenant un capteur 6 de contre-pression aux bornes du filtre 5 et des moyens d'estimation du débit de gaz dans la ligne 8 d'échappement. L'unité de supervision comprend des moyens de mise en œuvre d'un procédé tel que précédemment décrit.

L'invention n'est nullement limitée aux modes de réalisation décrits et illustrés qui n'ont été donnés qu'à titre d'exemples.

## Revendications

1. Procédé d'estimation d'une charge en suies d'un filtre (5) à particules pour moteur (1) thermique à allumage commandé, le filtre (5) se trouvant dans une ligne (8) d'échappement en sortie du moteur (1), dans lequel :
- on estime un gradient de pression (dPdV), l'estimation de ce gradient de pression (dPdV) se faisant par régression linéaire sur un nombre (N) de couples d'une mesure d'une contre-pression aux bornes du filtre (5) avec une estimation d'un débit volumique en amont du filtre (5) dans la ligne (8),
- on estime une charge en suies (BF) à partir de ce gradient de pression (dPdV),
- on effectue une moyenne sur un nombre (X) de valeurs de charge (BF) consécutives donnant une estimation finale d'une charge courante (BF) en suies,
**caractérisé en ce qu'**il est considéré un premier critère de stabilité basé sur une durée de calcul du gradient de pression (dPdV) avec, quand la durée de calcul de la valeur du gradient de pression (dPdV) est inférieure à un seuil de durée calibrable, la valeur de charge (BF) estimée à partir de ce gradient de pression (dPdV) est comptée dans le nombre de valeurs de charge (BF).

2. Procédé selon la revendication précédente, dans lequel la moyenne est effectuée sur le nombre de valeurs de charge (BF) consécutives quand toutes les valeurs de charge (BF) consécutives retenues pour la moyenne présentent des durées de calcul respectives inférieures au seuil de durée calibrable.

3. Procédé selon l'une quelconque des revendications précédentes, dans lequel le seuil de durée calibrable est de 100 secondes.

4. Procédé selon l'une quelconque des revendications précédentes, dans lequel le nombre (N) de couples est entre 800 et 1000 mesures.

5. Procédé selon l'une quelconque des revendications précédentes, dans lequel le nombre de valeurs de charge (BF) consécutives servant à la moyenne de la charge finale courante (BF) en suies est compris entre 1 et 5.

6. Procédé selon l'une quelconque des revendications précédentes, dans lequel la régression linéaire est faite selon la méthode des moindres carrés sur les couples sélectionnés.

7. Procédé selon l'une quelconque des revendications précédentes, dans lequel, lors de la sélection des couples pour l'estimation du gradient de pression (dPdV) en cours, il est ajouté un second critère de stabilité de point de fonctionnement basé sur le gradient de débit volumique des gaz à l'échappement en amont du filtre (5) à particules ainsi que du gradient de contre-pression du filtre (5) à particules.

8. Procédé selon l'une quelconque des revendications précédentes, dans lequel, l'estimation finale de la charge courante (BF) en suies sert à l'établissement ou la réactualisation d'un modèle (Ecs BO) et/ou d'un diagnostic (Ds GPF).

9. Procédé selon l'une quelconque des revendications précédentes, dans lequel quand la durée de calcul d'une valeur du gradient de pression (dPdV) en cours dépasse le seuil de durée, toutes les valeurs de gradient de pression (dPdV) estimées et incorporées dans le nombre de valeurs de charge (BF) sont effacées et un comptage des valeurs de charge (BF) est remis à zéro.

10. Groupe motopropulseur présentant un moteur (1) thermique à allumage commandé relié à sa sortie à une ligne (8) d'échappement des gaz issus d'une combustion dans le moteur (1), la ligne (8) d'échappement comprenant un filtre (5) à particules et le groupe motopropulseur une unité de supervision du filtre (5) à particules, la ligne (8) d'échappement comprenant un capteur (6) de contre-pression aux bornes du filtre (5) et des moyens d'estimation du débit de gaz dans la ligne (8) d'échappement, **caractérisé en ce que** l'unité de supervision comprend des moyens de mise en œuvre d'un procédé selon l'une quelconque des revendications précédentes.

## Patentansprüche

1. Verfahren zum Abschätzen einer Rußbeladung von einem Filter (5) für die Teilchen an den Motor (1) Wärme Zündung, den Filter (5) in einer Linie (8) Abgas Verlassen des Motors (1), in dem :
- ein Druckgradient (dPdV) wird geschätzt, wobei die Schätzung dieses Druckgradienten (dPdV) durch lineare Regression auf eine Anzahl (N) von Paaren einer Messung eines Gegendrucks an den Anschlüssen des Filters (5) mit an erfolgt Abschätzung eines Volumenstroms vor dem Filter (5) in der Leitung (8),
- aus diesem Druckgradienten (dPdV) wird eine Rußbeladung (BF) abgeschätzt,
- ein durchschnittliche erfolgt über eine Anzahl (X) von aufeinander folgenden Lastwerten (BF), um eine Angabe endgültige Schätzung einer aktuellen Last (BF) in Ruß,
**dadurch gekennzeichnet, dass** ein betrachtete erstes Stabilitätskriterium basierend auf einer Dauer Berechnung des Druckgradienten mit (dPdV), wenn die Periode des Wertes der Berechnung des Druckgradienten (dPdV) kleiner ist als eine Dauer Schwellenwert kalibrierbar, der Wert Last (BF) wird aus diesem Druckgradienten (dPdV) geschätztes in die Anzahl der Lastwerte (BF) gezählt.

2. Verfahren nach dem vorhergehenden Anspruch, bei dem der Durchschnitt der Anzahl aufeinanderfolgender Lastwerte (BF) durchgeführt wird, wenn alle für den Durchschnitt beibehaltenen aufeinanderfolgenden Lastwerte (BF) jeweilige Berechnungszeiten haben, die kleiner als die kalibrierbare Dauer sind Schwelle.

3. Verfahren nach einem der vorhergehenden Ansprüche, bei dem der kalibrierbare Dauerschwellenwert 100 Sekunden beträgt.

4. Verfahren nach einem der vorhergehenden Ansprüche, bei dem die Anzahl (N) von Paaren zwischen 800 und 1000 Messungen liegt.

5. Verfahren nach einem der vorhergehenden Ansprüche, bei dem die Anzahl aufeinanderfolgender Beladungswerte (BF), die als Durchschnitt der aktuellen Rußendbeladung (BF) dienen, zwischen 1 und 5 liegt.

6. Verfahren nach einem der vorhergehenden Ansprüche, bei dem die lineare Regression nach der Methode der kleinsten Quadrate an den ausgewählten Paaren durchgeführt wird.

7. Verfahren nach einem der vorhergehenden Ansprüche, bei dem bei der Auswahl der Drehmomente für die laufende Schätzung des Druckgradienten (dPdV) ein zweites Betriebspunktstabilitätskriterium basierend auf dem Betriebspunkt hinzugefügt wird der Volumenstrom der Abgase vor dem Partikelfilter (5) sowie das Staudruckgefälle des Partikelfilters (5).

8. Verfahren nach einem der vorhergehenden Ansprüche, bei dem die endgültige Schätzung der aktuellen Rußbeladung (BF) verwendet wird, um ein Modell (Ecs BO) und/oder eine Diagnose (DsGPF) zu erstellen oder zu aktualisieren.

9. Verfahren nach einem der vorhergehenden Ansprüche, wobei, wenn die Berechnungsdauer eines aktuellen Druckgradientenwertes (dPdV) den Dauerschwellenwert überschreitet, alle geschätzten Druckgradientenwerte (dPdV) und in die Anzahl der Lasten einfließen Werte (BF) werden gelöscht und eine Zählung von Ladewerten (BF) wird auf Null zurückgesetzt.

10. Antriebsstrang mit einer Wärmekraftmaschine (1) mit gesteuerter Zündung, die an ihrem Ausgang mit einer Leitung (8) zum Ablassen von Verbrennungsgasen in der Brennkraftmaschine (1) verbunden ist, wobei die Abgasleitung (8) einen Partikelfilter (5) umfasst und der Antriebsstrang eine Überwachungseinheit für den Partikelfilter (5), wobei die Abgasleitung (8) einen Gegendrucksensor (6) über dem Filter (5) und Mittel zum Schätzen des Gasflusses in der Abgasleitung (8) umfasst, **dadurch gekennzeichnet, dass** die Überwachungseinheit Mittel zum Implementieren eines Verfahrens nach einem der vorhergehenden Ansprüche umfasst.

## Claims

1. Method of estimating a soot loading of a filter (5) for particles to motor (1) heat-ignition, the filter (5) in a line (8) exhaust leaving the engine (1), in which :
- a pressure gradient (dPdV) is estimated, the estimation of this pressure gradient (dPdV) being done by linear regression on a number (N) of couples of a measurement of a back pressure at the terminals of the filter (5) with an estimate of a volume flow upstream of the filter (5) in the line (8),
- a soot load (BF) is estimated from this pressure gradient (dPdV),
- an average is carried out over a number (X) of consecutive load values (BF) giving a final estimate of a current load (BF) in soot,
**characterized in that** it is considered a first stability criterion based on a duration calculation of the pressure gradient (dPdV) with, when the period of calculating the value of the pressure gradient (dPdV) is less than a duration threshold calibratable, the load value (BF) estimated from this pressure gradient (dPdV) is counted in the number of load values (BF).

2. Method according to the preceding claim, in which the average is carried out on the number of consecutive load values (BF) when all the consecutive load values (BF) retained for the average have respective calculation times less than the calibratable duration threshold.

3. Method according to any one of the preceding claims, in which the calibratable duration threshold is 100 seconds.

4. Method according to any one of the preceding claims, in which the number (N) of pairs is between 800 and 1000 measurements.

5. Method according to any one of the preceding claims, in which the number of consecutive load values (BF) serving as the average of the current final load (BF) of soot is between 1 and 5.

6. Method according to any one of the preceding claims, in which the linear regression is carried out according to the method of least squares on the selected pairs.

7. Method according to any preceding claims, in wich, during the selection of the torques for the estimation of the pressure gradient (dPdV) in progress,
a second criterion stability of an operating point based on the gradient volume flow rate of the exhaust gases upstream of the particulate filter (5) as well as the back pressure gradient of the particulate filter (5).

8. Method according to any one of the preceding claims, in which the final estimate of the current soot load (BF) is used to establish or update a model (Ecs BO) and/or a diagnosis (DsGPF).

9. A method according to any one of the preceding claims, wherein when the duration of calculating a current pressure gradient (dPdV) value exceeds the duration threshold, all of the pressure gradient (dPdV) values estimated and incorporated into the number of load values (BF) are cleared and a count of load values (BF) is reset.

10. Powertrain having a thermal engine (1) with controlled ignition connected at its outlet to a line (8) for exhausting gases from combustion in the engine (1), the line (8) of exhaust comprising a particulate filter (5) and the power train a monitoring unit for the particulate filter (5), the exhaust line (8) comprising a backpressure sensor (6) across the filter (5) and means for estimating the gas flow in the exhaust line (8), **characterized in that** the supervision unit comprises means for implementing a method according to any one of the preceding claims.
